(19) Europäisches Patentamt
European Patent Office
Office européen des brevets

(11) Numéro de publication : **0 155 867**
**B1**

(12) # FASCICULE DE BREVET EUROPÉEN

(45) Date de publication du fascicule du brevet : **08.07.87**

(51) Int. Cl.⁴ : **C 01 B 3/38**

(21) Numéro de dépôt : **85400302.7**

(22) Date de dépôt : **20.02.85**

(54) **Nouveau procédé de fabrication de gaz de synthèse par oxydation indirecte d'hydrocarbures.**

(30) Priorité : **09.03.84 FR 8403791**

(43) Date de publication de la demande : **25.09.85 Bulletin 85/39**

(45) Mention de la délivrance du brevet : **08.07.87 Bulletin 87/28**

(84) Etats contractants désignés : **DE GB IT NL**

(56) Documents cités : **US-A- 3 278 452**

(73) Titulaire : **INSTITUT FRANCAIS DU PETROLE**
**4, Avenue de Bois-Préau**
**F-92502 Rueil-Malmaison (FR)**

(72) Inventeur : **Quang, Dang Vu**
**48 bis, Boulevard du Général Leclerc**
**F-92200 Neuilly (FR)**
Inventeur : **Raimbault, Claude**
**résidence de la Source 17-19, rue de Maule**
**F-78870 Bailly (FR)**
Inventeur : **Bonifay, Régis**
**21, rue de l'Alma**
**F-92600 Asnières (FR)**
Inventeur : **Le Page, Jean-François**
**13, rue des Primevères**
**F-92500 Rueil-Malmaison (FR)**

**EP 0 155 867 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne un procédé de fabrication d'un gaz de synthèse renfermant de l'hydrogène et des oxydes de carbone. Le gaz obtenu peut être utilisé notamment, pour la synthèse d'alcools primaires.

Il est connu de fabriquer du gaz de synthèse formé d'hydrogène et d'oxydes de carbone par une oxydation contrôlée de mélanges d'hydrocarbures comme, par exemple, le gaz naturel, le gaz de pétrole liquéfié ou le naphta.

L'opération se fait à haute température et en présence de la vapeur d'eau.

D'un point de vue théorique, l'oxydation contrôlée est particulièrement intéressante dans le cas des gaz de synthèse destinés à la fabrication du méthanol car elle permet, par ajustement de la quantité d'oxygène, d'obtenir un gaz ayant exactement la stoechiométrie requise par la production de cet alcool.

En effet, par exemple, on peut écrire pour les premiers termes d'hydrocarbures saturés les équations suivantes :

$$CH_4 + 1/2\ O_2 \rightarrow CO + 2\ H_2 \quad (1)$$

$$C_2\ H_6 + 1/2\ O_2 + H_2\ O \rightarrow 2\ CO + 4\ H_2 \quad (2)$$

$$C_3\ H_8 + 1/2\ O_2 + 2\ H_2\ O \rightarrow 3\ CO + 6\ H_2 \quad (3)$$

Plus généralement, on peut écrire :

$$C_n\ H_{2n+2} + 1/2\ O_2 + (n-1)\ H_2\ O \rightarrow n\ CO + 2n\ H_2 \quad (4)$$

Rappelons que le méthanol se synthétise selon l'équation :

$$n\ CO + 2n\ H_2 \rightleftarrows n\ CH_3\ OH \quad (5)$$

En fait les choses sont légèrement plus compliquées car aux températures où l'on fabrique le gaz de synthèse l'eau réagit aussi bien sur les hydrocarbures que sur le CO résultant selon la formule bien connue du gaz à l'eau :

$$CO + H_2\ O \rightleftarrows CO_2 + H_2 \quad (6)$$

Le $CO_2$ contenu dans le gaz de synthèse donne ensuite le méthanol selon l'équation :

$$n\ CO_2 + 3n\ H_2 \rightleftarrows n\ CH_3\ OH + n\ H_2\ O \quad (7)$$

Pour faire de l'oxydation, la méthode la plus sûre et la plus courante est évidement la combustion à flamme vive soit à l'air soit à l'oxygène pur.

Sauf pour la fabrication de l'ammoniac où l'azote constitue un réactif nécessaire, dans le cas des autres gaz de synthèse, on n'utilise exclusivement que de l'oxygène pur.

La combustion vive à l'oxygène pur présente cependant de nombreux inconvénients.

D'une part, les très hautes températures que donne la flamme posent de nombreux problèmes quant à la tenue du matériau surtout si l'opération doit se faire sous pression élevée.

D'autre part, quand l'oxygène est en quantité insuffisante pour transformer stoéchiométriquement le carbone en dioxyde de carbone et l'hydrogène en vapeur d'eau, la combustion est incomplète et l'opération se fait toujours avec production d'une quantité plus ou moins grande de suie (C.P. Marion & J.R. Muenger, AICHE Meeting, 5-9 Avril 1981).

C'est la raison pour laquelle, dans les procédés d'oxydation partielle courants, on ne descend pas en deçà d'une valeur de 0,7 en ce qui concerne le rapport molécules d'oxygène sur atomes de carbone à brûler (Hydrocarbon processing, Sept 1979, p. 191-194).

Or, quand on examine les équations de (1) à (4), on s'aperçoit que le rapport $O_2/C$ va de 0,5 pour l'équation (1) à 1/2n pour l'équation (4), n étant le nombre d'atomes de carbone de la molécule à oxyder.

Une autre voie est l'oxydation catalytique des hydrocarbures.

Sous la pression atmosphérique, cette voie est couramment utilisée dans des procédés industriels comme le procédé ONIA-GEGI par exemple.

Le coût croissant de l'énergie nécessaire à la compression du gaz fabriqué rend actuellement ces procédés peu économiques.

Dans les années 60, des essais de mise sous pression de la voie d'oxydation catalytique, seule capable de respecter la stoéchiométrie du méthanol, furent entrepris.

Réalisés avec de l'oxygène pur, ces essais se sont révélés infructueux, soit à cause des phénomènes d'explosion, soit à cause des phénomènes de bouchages du lit catalytique (Chem. Eng. Prog., Vol. 61, n° 11, p. 85-88, Novembre 1965).

Réalisés avec des mélanges d'air et d'air enrichi, ces essais ont donné naissance aux procédés dits de reformages primaire et secondaire (D.R. Holland & S.W. Wan, Chem. Eng. Prog., Vol. 55 (8), p. 69-74,

Août 1963) destinés à la synthèse de l'ammoniac.

Dans ces procédés, pour éviter les phénomènes de bouchages, on réalise le reformage à la vapeur d'eau sur tout ou partie des hydrocarbures avant de mettre en contact l'ensemble avec de l'oxygène, dilué par l'azote de l'air.

Pour rester en-deçà d'une certaine concentration en oxygène, surtout dans le cas où les hydrocarbures sont du genre naphta ou plus lourds, il a été proposé (Brevet U.S. n° 3 278 452) d'introduire le mélange d'azote et d'oxygène en deux étapes successives.

Récemment, il a été proposé d'appliquer le principe des reformages primaire et secondaire à l'oxygène pur (Brevet français n° 2 372 116).

Une comparaison de la teneur en oxygène du mélange utilisé avec les limites d'explosivité des gaz dans de l'oxygène pur permet de se rendre compte des difficultés potentielles d'une telle application.

Par le procédé de la présente invention, les difficultés inhérentes à la voie d'oxydation catalytique à l'oxygène pur et sous pression sont supprimées.

Le présent procédé de fabrication de gaz de synthèse est défini comme suit :

Procédé de fabrication d'un gaz de synthèse, renfermant de l'hydrogène et des oxydes de carbone, à partir d'une charge d'hydrocarbures, d'eau, d'oxygène libre et d'un gaz de transfert renfermant au moins 25 % en volume de vapeur d'eau et au moins 2 % en volume d'au moins un oxyde de carbone choisi dans le groupe formé par le monoxyde de carbone et le dioxyde de carbone, caractérisé en ce que simultanément :

On fait traverser au gaz de transfert une succession d'au moins 2, de préférence d'au moins 4 lits catalytiques essentiellement adiabatiques, et

On introduit à chaque entrée successive de lit catalytique, en alternance, soit une fraction d'hydrocarbures soit de l'oxygène, étant entendu que le gaz de transfert, qui doit recevoir l'oxygène ne contient au maximum, au point d'introduction d'oxygène, que 25 % en volume de méthane et 5 % en volume d'hydrocarbures supérieurs, que la quantité d'oxygène introduite à chaque entrée concernée de lit catalytique est inférieure à la quantité susceptible de conduire à un mélange explosif après mélange avec le gaz de transfert, et que le gaz de transfert qui doit recevoir les hydrocarbures ne contient au maximum, au point d'introduction des hydrocarbures, que 1 000 parties par million en volume d'oxygène libre.

Le procédé est généralement mis en œuvre :

Sous une pression comprise entre 1 et 50 MPa, de préférence entre 3 et 30 MPa.

A une température comprise entre 500 et 3 000 °C, de préférence entre 700 et 2 000 °C.

Ainsi, dans le mode opératoire préféré de l'invention, un mélange d'hydrocarbures, divisé en plusieurs fractions, est craqué et oxydé catalytiquement par un gaz dit « gaz de transfert » lui-même réoxydé ultérieurement par de l'oxygène pur, divisé en plusieurs fractions. Les points d'introduction d'hydrocarbures et d'oxygène dans le lit catalytique sont distincts et alternés et choisis en des points suffisamment éloignés les uns des autres sur le trajet des gaz pour que à aucun moment le mélange gazeux résultant n'ait une concentration très élevée à la fois en éléments combustibles et en oxygène, c'est-à-dire une concentration susceptible de résulter en une explosion ou une décomposition brutale. En tous points la valeur L de la concentration en oxygène doit être respectée. L sera défini plus loin.

Selon une forme préférée de réalisation du procédé de l'invention, le gaz de transfert constitué le plus souvent par de la vapeur d'eau, des oxydes de carbone, de l'hydrogène et de faibles quantités d'hydrocarbures, notamment du méthane, après avoir été porté à haute température, est mis en circulation à travers la zone catalytique divisée en plusieurs compartiments et reçoit à l'entrée de chaque compartiment, alternativement et successivement, une partie du mélange d'hydrocarbures avec éventuellement de la vapeur d'eau et une partie de l'oxygène avec éventuellement de la vapeur d'eau, la charge d'hydrocarbures et l'oxygène étant ainsi divisés chacun en plusieurs parties aliquotes.

De cette façon, l'oxygène ne se trouve jamais en contact direct avec le mélange d'hydrocarbures frais dont la réaction avec l'oxygène risque d'être trop violente et de dégénérer soit en explosion soit en décomposition brutale.

Une des caractéristiques du présent procédé tient en ce que le gaz de transfert destiné à être mis en contact direct avec l'oxygène est un mélange, à base de vapeur d'eau et d'oxydes de carbone, pauvre ou appauvri en éléments hydrocarbures ; ce gaz ne renferme pas plus de 25 % en volumes de méthane et pas plus de 5 % en volumes d'hydrocarbures supérieurs. De préférence la quantité totale d'hydrocarbures de ce gaz ne dépasse pas 15 % en volumes.

Le gaz de transfert peut être obtenu de toute manière connue et par exemple à partir du mélange d'hydrocarbures destiné à la fabrication du gaz de synthèse, soit par combustion vive à l'oxygène, soit par reformage à la vapeur d'eau, soit par l'une et l'autre méthodes utilisées simultanément ou successivement.

La combustion vive à l'oxygène est caractérisée en ce que la quantité d'oxygène utilisé à cet effet doit être égale à au moins 0,4 fois la quantité nécessaire pour transformer le carbone du mélange en dioxyde de carbone et l'hydrogène du mélange en vapeur d'eau.

En d'autres termes, si on désigne par $C_a$ $H_{4b}$ la molécule moyenne représentant le mélange d'hydrocarbures et par c la quantité d'oxygène à utiliser on a :

$$C_a H_{4b} + (a + b) O_2 \rightarrow a CO_2 + 2b H_2 O \quad (8)$$

$$c \geq 0,4 (a + b) \quad (9)$$

Pour tempérer la température de la flamme on injecte de la vapeur d'eau dont le rapport molécules d'eau/atomes de carbone doit être supérieur à 0,5 et de préférence supérieur à 1.

La production de gaz de transfert peut aussi être réalisée, de manière connue, par reformage d'hydrocarbures à la vapeur d'eau de préférence à une pression voisine de celle de fabrication du gaz de synthèse et à une température comprise entre 500 et 1 000 °C, de préférence entre 600 et 900 °C.

Une autre caractéristique du procédé de l'invention réside dans l'emploi d'oxygène pur (pureté d'au moins 90 %, de préférence au moins 95 %, c'est-à-dire au plus 10 %, de préférence au plus 5 % d'azote).

Sa teneur % en volume dans le mélange obtenu avec le gaz de transfert ne doit jamais être supérieure à la valeur L obtenue par dérivation de la loi de Le Chatelier selon la formule (10)

$$L = \frac{100}{\frac{PH_2}{NH_2} + \frac{PCO}{NCO} + \frac{PCH_4}{NCH_4}} \quad (10)$$

PH2, PCO et PCH4 sont respectivement les proportions d'hydrogène, de monoxyde carbone et de méthane du mélange de transfert, définies de façon telle que :

$$PH2 + PCO + PCH4 = 100 \quad (11)$$

P étant exprimé en volume %.

NH2, NCO et NCH4 sont les concentrations limites inférieures d'explosivité de respectivement, l'hydrogène, le monoxyde de carbone et le méthane dans de l'oxygène pur données par exemple par le livre « Les mélanges explosifs », édition Institut National de Sécurité n° 335, p. 128, Sept. 1964.

| | Limites inférieures d'explosivité : |
|---|---|
| Hydrogène | 4,65 volumes pour cent |
| Oxyde de carbone | 15,50 volumes pour cent |
| Méthane | 5,15 volumes pour cent |

D'autres caractéristiques sont précisées dans la description qui suit.

Les figures 1 à 5 illustrent l'invention.

Les figures 1 et 2 représentent des schémas de procédé utilisant un lit catalytique réparti entre des réacteurs distincts.

Les figures 3, 4 et 5b représentent en coupe longitudinale des réacteurs contenant la totalité du catalyseur.

La figure 5a est une coupe transversale du réacteur de la figure 5b.

Dans l'unité de fabrication de gaz de synthèse représentée par la figure 1, le gaz de transfert est amené par le conduit 1. Il est sous pression et a été préchauffé.

Du conduit 1, il passe successivement dans les enceintes 2, 3, 4, 5, 6 et 7, contenant chacune, un lit de catalyseur de reformage à la vapeur d'eau, par exemple un catalyseur au nickel déposé sur support réfractaire, par exemple l'alumine. D'autres catalyseurs sont décrits, par exemple, dans le brevet U.S. 3 278 452.

Le mélange d'hydrocarbures destiné à la fabrication du gaz de synthèse, préalablement conditionné en pression et température et contenant de la vapeur d'eau pour éviter les dépots éventuels de carbone et de suie, est introduit par le conduit 8 et réparti par les conduits 9, 10, et 11 dans les enceintes 2, 4 et 6.

Dans ces enceintes, grâce à la température élevée et sous l'action du catalyseur, il se réalise un réarrangement moléculaire ayant pour effet de transformer les hydrocarbures en hydrogène, oxydes de carbone et méthane. Essentiellement, l'oxygène du dioxyde de carbone et de l'eau réagit avec le carbone des hydrocarbures pour donner du monoxyde de carbone et libérer de l'hydrogène.

La transformation est endothermique et les gaz sortent à des températures beaucoup plus basses que celles qu'ils ont à l'entrée des lit catalytiques.

A la sortie de ces lits, ils sont mélangés avec de l'oxygène amené par le conduit 12 et réparti par les conduits 13, 14 et 15.

L'oxygène détruit le méthane résiduaire contenu dans le gaz de transfert, suroxyde le monoxyde de carbone et réagit avec l'hydrogène pour donner de l'eau.

L'opération est catalysée par les lits catalytiques contenus dans les enceintes 3, 5 et 7. Cette opération a pour effet de réchauffer les gaz qui finalement sortent par le conduit 16 où pratiquement tous les hydrocarbures introduits par le conduit 8 et tout l'oxygène introduit par le conduit 12 ont disparu.

Au total tout se passe comme si les hydrocarbures du conduit 8 avaient été oxydés par l'oxygène du

conduit 12 mais on voit que, par le procédé de l'invention, l'oxygène est toujours à une teneur faible et n'est jamais en contact substantiel direct avec les hydrocarbures frais dont la trop forte réactivité a toujours tendance à dévier les réactions soit vers l'explosion soit vers la décomposition brutale, par exemple, en noir de carbone ou en suie.

Sur la figure 1 on a supposé que le gaz de transfert ne contenait pratiquement pas d'hydrocarbures et on a commencé l'opération avec un reformage à la vapeur d'une partie des hydrocarbures à transformer.

Il va sans dire que l'ordre d'introduction peut être inversé et, sur la figure 2 on a représenté un cas ou le gaz de transfert renfermait suffisamment de méthane (ou autres hydrocarbures) pour absorber une partie de l'oxygène ; celui-ci a donc été injecté en premier sur le lit catalytique de l'enceinte 2. Dans ce cas les conduits 9, 10 et 11 aboutissent respectivement aux enceintes 3, 5 et 7 et les conduits 13, 14 et 15 aux enceintes 2, 4 et 6.

Sur les figures 1 et 2 on a représenté six enceintes catalytiques renfermant chacune un lit catalytique. Le nombre des lits peut varier de 2 à 30, de préférence de 4 à 20, sans que cela sorte du procédé de l'invention.

Sur ces figures, les lits catalytiques, au nombre d'au moins 2, de préférence d'au moins 4, sont enfermés dans des enceintes distinctes et séparées.

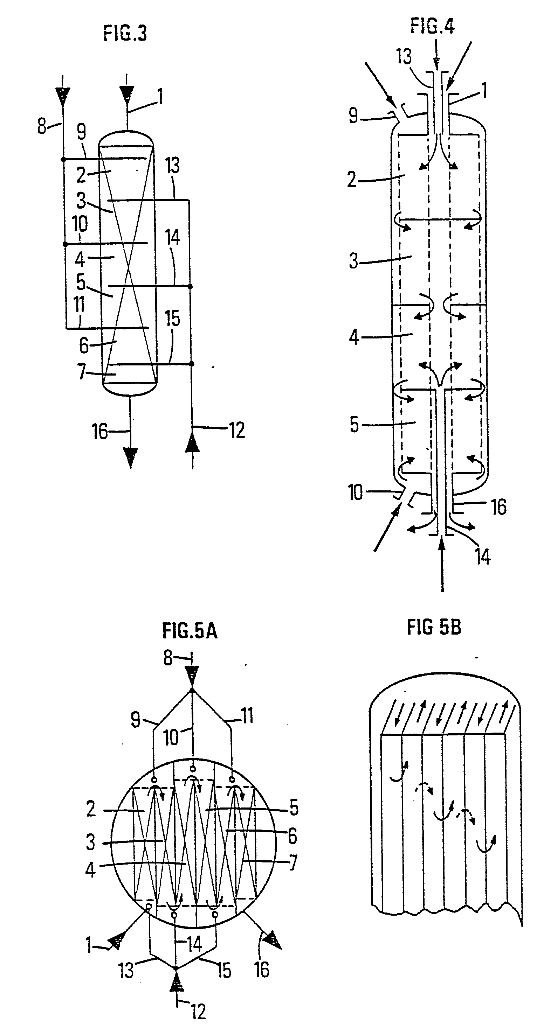

Il se comprend aisément que dans la réalisation du procédé de l'invention, ces lits peuvent être enfermés dans une même enceinte et disposés comme sur les figures 3 ou 4, par exemple, où, aux mêmes numéros de référence, correspondent les mêmes éléments que dans les figures 1 et 2.

Une réalisation préférée du procédé de l'invention consiste à utiliser le réacteur longitudinal représenté par les figures 5a et 5b (demande de brevet français n° 2 527 097).

Exemple 1 (figure 1)

Pour fabriquer du gaz de synthèse on part de 7,2 moles de CH4 (conduit 8) et de 2 moles d'oxygène (conduit 12) et on dispose d'un gaz de transfert composé d'une mole de dioxyde de carbone et de 22 moles d'eau vapeur (conduit 1).

Les gaz sont sous une pression de 5 MPa.

Le gaz de transfert est porté à 1 500 °C.

Le gaz de transfert est mélangé d'abord avec 3,2 des 7,2 moles de méthane et avec 1,5 moles d'eau portées au préalable à 750 degrés centigrades (conduit 9).

Le mélange passe sur le lit catalytique placé dans l'enceinte 2 et contenant un catalyseur à base de nickel sur alumine.

En sortie, on obtient 33,6 moles de gaz dont la température est de 870 °C environ et dont la composition est approximativement la suivante en volumes :

| | |
|---|---|
| CO : | 4,7 |
| CO2 : | 7,1 |
| H2 : | 30,7 |
| CH4 : | 0,7 |
| H20 : | 56,8 |
| | 100,0 |

Les gaz passent de l'enceinte 2 dans l'enceinte 3, et reçoivent 0,7 des 2 moles d'oxygène dilué dans 0,35 mole de vapeur d'eau (conduit 13).

En sortie de l'enceinte 3, la température des gaz, sous l'effet de l'oxydation, est remontée à 1 070 °C et leur composition devient en volumes pour cent :

| | |
|---|---|
| CO : | 5,9 |
| CO2 : | 6,3 |
| H2 : | 27,2 |
| CH4 : | 100 parties par million |
| H20 : | 60,6 |

On continue ainsi avec le reste des gaz, soit :

2 moles de CH4 et 1 mole d'eau dans 10
2 moles de CH4 et 1 mole d'eau dans 11
0,7 mole d'oxygène et 0,35 mole d'eau dans le conduit 14
0,6 mole d'oxygène et 0,3 mole d'eau dans le conduit 15.

Au cours de ces injections après chaque introduction et craquage du méthane sur le lit catalytique la température est ramenée à 870 °C environ. L'injection et la réaction de l'oxygène par contre font remonter la température à 1 070 °C après la 1ère injection, à 990 °C après la deuxième et 930 °C après la troisième.

La teneur du méthane qui est remontée à 5 ou 6 % lors de chaque introduction de ce gaz redescend ensuite par reformage à environ 1,8 % à la sortie de l'enceinte 4 et à environ 2,7 % à la sortie de l'enceinte 6.

Après chaque oxydation, la teneur du méthane diminue encore jusqu'à 0,2 % à la sortie de l'enceinte 5 et jusqu'à 1 % environ à la sortie de l'enceinte 7. Il est à noter que, aux endroits où on introduit le méthane, la teneur résiduaire de l'oxygène est pratiquement indosable.

En définitive les gaz sortent par 16 à une température de 930 degrés centigrades.

Après condensation d'eau, on obtient 26,7 moles de gaz dont la composition approximative est la suivante (en pour cent en volumes) :

| | |
|---|---|
| CO : | 16,0 |
| CO2 : | 12,8 |
| H2 : | 69,3 |
| CH4 : | 1,9 |
| | 100,0 |

On notera que le rapport H2 / (2 CO + 3 CO2) est égal à 0,984, donc très voisin de la stoéchiométrie de synthèse du méthanol.

Exemple 2

Pour faire sensiblement le même gaz de synthèse, on part cette fois ci de 8,2 moles de CH4 et de 4 moles d'oxygène.

On en prélève 1 mole de CH4 et 2 moles d'oxygène qu'on envoie séparément sur un brûleur, de manière à former le gaz de transfert.

Pour limiter la température à 1 500 °C, on envoie en même temps dans la chambre de combustion 20 moles d'eau et on obtient en sortie un gaz de transfert sensiblement identique à celui dont on dispose au départ dans l'exemple 1.

Sur le restant des gaz (7,2 moles de CH4 et 2 moles d'oxygène) on procède de façon identique à celle décrite dans l'exemple 1.

Exemple 3 (figure 2)

On dispose de 1 500 k moles/h de gaz naturel (conduit 8), de 1 320 k moles/h d'oxygène (conduit 12) et d'un débit de 11 200 k moles par heure d'un gaz de transfert dont la composition est approximativement la suivante en volumes pour cent :

| | |
|---|---|
| CO : | 5,0 |
| CO2 : | 6,4 |
| H2 : | 36,6 |
| CH4 : | 8,5 |
| H20 : | 43,5 |
| | 100,0 |

Le gaz est introduit dans le conduit 1 sous 5 MPa à 800 degrés centigrades. Il est envoyé (figure 2) dans l'enceinte 2 qui reçoit également 440 des 1 320 k moles/h d'oxygène provenant du conduit 13.

L'enceinte 2 contient un catalyseur de même nature que dans les exemples 1 et 2.

Le reste de l'oxygène alimenté par le conduit 12 est réparti par moitié entre les conduits 14 et 15.

A la sortie de l'enceinte 2 le gaz se trouve à 920 °C avec la composition suivante en volumes :

| | |
|---|---|
| CO : | 9,3 |
| CO2 : | 6,3 |
| H2 : | 42,5 |
| CH4 : | 2,1 |
| H20 : | 39,8 |
| | 100,0 |

Le gaz ainsi réchauffé et oxydé va servir à réarranger les 500 des 1 500 k moles/h de gaz naturel. Ces 500 k moles/h sont amenées par le conduit dérivé 9 débouchant dans l'enceinte 3.

Le gaz naturel d'appoint a la composition volumique approximative suivante :

| | |
|---|---|
| CO2 : | 1,80 |
| CH4 : | 82,65 |
| C2H6 : | 13,95 |
| C3H8 : | 1,60 |
| | 100,00 |

Le reste du gaz naturel d'appoint (1 000 k moles/h) est réparti par moitié entre les conduits 10 et 11.

A la sortie de l'enceinte 3, sous l'effet du lit catalytique et grâce à la chaleur et l'oxygène combiné apporté par le gaz de transfert provenant de l'enceinte 2, les molécules d'hydrocarbures apportées par le conduit 5 sont transformées en H2 et oxydes de carbone et on obtient 13 200 k moles/h de gaz dont la composition volumique approximative est la suivante :

| | |
|---|---|
| CO : | 8,8 |
| CO2 : | 6,6 |
| H2 : | 41,8 |
| CH4 : | 5,9 |
| H20 : | 36,9 |
| | 100,0 |

La température des gaz est tombée à 870 °C.

On continue ainsi à travers les lits catalytiques des enceintes 4, 5, 6 et 7 avec successivement 440 k moles/h d'oxygène (conduit 14), 500 k moles/h de mélange d'hydrocarbures (conduit 10), 440 k moles/h d'oxygène (conduit 15) et enfin les 500 dernières k moles/h de mélange d'hydrocarbures (conduit 11).

Les températures sont remontées à 920 °C après la première injection d'oxygène, à 990 °C, après la deuxième et à 1 060 °C après la dernière.

Elles retombent à 870 °C après la première injection de gaz naturel, à 920 °C après la deuxième et à 960 °C après la troisième et dernière.

Au point de vue composition, si l'injection de gaz naturel n'affecte pratiquement pas les teneurs en CO et CO2, les injections d'oxygène font passer la teneur du CO de 5 % à 9 % après la première injection, de 9 % à 12 % après la deuxième et de 12 % à 15 % après la dernière. Le CO2 par contre reste toujours aux alentours de 5 à 6 %.

La teneur du méthane est divisée par un facteur de 4 à 6 après chaque introduction d'oxygène. Elle diminue de 1 à 2 point par contre après chaque passage sur les lits de reformage.

Les gaz sortent finalement par le conduit 16 à une température de 960 °C environ.

Après condensation et élimination de l'eau, on obtient 12 000 k moles/h d'un gaz de synthèse dont la composition en volumes est environ la suivante :

| | |
|---|---|
| CO : | 20,8 |
| CO2 : | 8,3 |
| H2 : | 67,0 |
| CH4 : | 3,9 |
| | 100,0 |

On note que le rapport représentatif de la stoéchiométrie de synthèse du méthanol H2/(2CO + 3CO2) est égal à 1,008 soit pratiquement la valeur théorique.

Exemple 4

On dispose cette fois ci de 3 400 k moles/h du même gaz naturel que dans l'exemple 2 et de 1 320 k moles/h d'oxygène.

On prélève 1 900 k moles/h du gaz naturel qu'on envoie à travers les tubes remplis de catalyseur d'un four de reformage en présence de 6 800 k moles/h de vapeur d'eau. On opère sous 5 MPa et à 800 °C.

En sortie on obtient 11 200 k moles/h d'un gaz dont la composition est celle d'un gaz de transfert utilisé dans l'exemple 3.

Sur les 1 320 k moles/h d'oxygène et les 1 500 k moles/h de gaz naturel restant, on procède de façon identique à l'exemple 3.

**Revendications**

1. Procédé de fabrication d'un gaz de synthèse, renfermant de l'hydrogène et des oxydes de carbone, à partir d'une charge d'hydrocarbures, d'eau, d'oxygène libre et d'un gaz de transfert renfermant au moins 25 % en volume de vapeur d'eau et au moins 2 % en volume d'au moins un oxyde de carbone choisi dans le groupe formé par le monoxyde de carbone et le dioxyde de carbone, caractérisé en ce que, simultanément :

On fait traverser au gaz de transfert une succession d'au moins 2 lits catalytiques essentiellement adiabatiques, et

On introduit à chaque entrée de la succession de lits catalytiques, en alternance, soit une fraction de la charge d'hydrocarbures soit une fraction du débit d'oxygène, étant entendu que le gaz de transfert, qui doit recevoir l'oxygène ne contient au maximum, au point d'introduction d'oxygène, que 25 % en volume

de méthane et 5 % en volume d'hydrocarbures supérieurs, que la quantité d'oxygène introduite à chaque entrée concernée de lit catalytique est inférieure à la quantité susceptible de conduire à un mélange explosif après mélange avec le gaz de transfert, et que le gaz de transfert qui doit recevoir les hydrocarbures ne contient au maximum, au point d'introduction des hydrocarbures, que 1 000 parties par million en volumes d'oxygène libre.

2. Procédé selon la revendication 1 caractérisé en ce que les opérations se font sous une pression de 1 à 50 MPa et à une température comprise entre 500 et 3 000 °C.

3. Procédé selon la revendication 1 ou 2, caractérisé en ce qu'on opère avec une charge d'hydrocarbures de formule moléculaire moyenne CaH4b et en ce que le gaz de transfert est obtenu par combustion vive, en présence de vapeur d'eau, d'une fraction de la charge d'hydrocarbures, la combustion se faisant à l'oxygène d'une pureté supérieure à 90 % en volumes et sous des conditions telles que la quantité moléculaire d'oxygène soit au moins égale à 0,4 fois la somme (a + b) et que le rapport moléculaire H2O sur atome de carbone soit supérieur à 1.

4. Procédé selon la revendication 1 ou 2, caractérisé en ce que le gaz de transfert est obtenu par reformage à la vapeur d'eau d'une fraction de la charge d'hydrocarbures, le reformage se faisant pratiquement sous la même pression que celle de la fabrication du gaz de synthèse et à une température comprise entre 500 et 1 000 °C.

5. Procédé selon la revendication 1 ou 2, caractérisé en ce que le nombre de lits catalytiques est d'au moins 4.

6. Procédé selon l'une des revendications 1 à 5, caractérisé en ce que l'oxygène est introduit à l'entrée des lits de numéro d'ordre impair et l'hydrocarbure à l'entrée des lits de numéro d'ordre pair.

7. Procédé selon l'une des revendications 1 à 5, caractérisé en ce que l'hydrocarbure est introduit à l'entrée des lits de numéro d'ordre impair et l'oxygène à l'entrée des lits de numéro d'ordre pair.

8. Procédé selon l'une des revendications 1 à 7, caractérisé en ce que les opérations se font sous une pression de 3 à 30 MPa et à une température comprise entre 700 et 2 000 °C.

9. Procédé selon l'une des revendications 1 à 8, caractérisé en ce que chaque fraction d'oxygène est telle que le pourcentage en volume d'oxygène dans le mélange de ladite fraction avec le gaz de transfert est inférieur à L défini par la relation :

$$L = \frac{100}{\frac{PH_2}{NH_2} + \frac{PCO}{NCO} + \frac{PCH_4}{NCH_4}}$$

où $PH_2$, PCO et PCH4 sont respectivement les proportions d'hydrogène, de monoxyde de carbone et de méthane, telles que $PH_2 + PCO + PCH_4 = 100$ et $NH_2$, NCO et $NCH_4$ sont les concentrations limites % d'explosivité de respectivement l'hydrogène, le monoxyde de carbone et le méthane.

**Claims**

1. A process for manufacturing a synthesis gas containing hydrogen and carbon oxides, from a hydrocarbons charge, water, free oxygen and a transfer gas containing at least 25 % by volume of steam and at least 2 % by volume of at least one carbon oxide selected from the group consisting of carbon monoxide and carbon dioxide, characterized by the simultaneous steps of :

passing the transfer gas through a succession of at least two essentially adiabatic catalyst beds, and

introducing at each input of the successive catalyst bed, in alternation, either a fraction of the hydrocarbons charg or a fraction of oxygen flow, provided that the transfer gas which must receive oxygen does not contain more than 25 % by volume of methane and 5 % by volume of higher hydrocarbons at the point of oxygen introduction, that the oxygen amount introduced at each catalyst bed input is lower than the amount liable to form an explosive mixture with the transfer gas, and that the transfer gas which must receive the hydrocarbons does not contain more than 1,000 parts per million by volume of free oxygen at the point of hydrocarbons introduction.

2. A process according to claim 1 characterized in that the operations are conducted under a pressure of 1-50 MPa at a temperature of 500-3 000 °C.

3. A process according to claim 1 or 2, characterized in that the hydrocarbons charge has the average molecular formula $C_aH_{4b}$ and the transfer gas is obtained by vivid combustion in the presence of steam, of a fraction of the hydrocarbon charge, the combustion being performed with oxygen of a purity higher than 90 % by volume and under such conditions that the oxygen molar amount be at least equal to 0.4 time the sum (a + b) and the molecular ratio of $H_2O$ to carbon atoms be higher than 1.

4. A process according to claim 1 or 2, characterized in that the transfer gas is obtained by steam-reforming of a fraction of the hydrocarbon charge, the reforming being conducted practically at the same pressure as that of the synthesis gas manufacture and at a temperature from 500 to 1 000 °C.

5. A process according to claim 1 or 2, characterized in that the number of catalyst beds is at least 4.

6. A process according to one of claims 1 to 5, characterized in that oxygen is introduced at the input of the beds of odd order and the hydrocarbon at the input of the beds of even order.

7. A process according to one of claims 1 to 5, characterized in that the hydrocarbon is introduced at the input of the beds of odd order and the oxygen at the input of the beds of even order.

8. A process according to one of claims 1 to 7, characterized in that the operations are conducted under a pressure from 3 to 30 MPa and at a temperature from 700 to 2 000 °C.

9. A process according to one of claims 1 to 8, characterized in that each oxygen fraction corresponds to an oxygen proportion by volume in the mixture thereof with the transfer gas lower than the value L. defined as :

$$L = \frac{100}{\frac{PH_2}{NH_2} + \frac{PCO}{NCO} + \frac{PCH_4}{NCH_4}}$$

wherein $PH_2$, PCO and $PCH_4$ are respectively the hydrogen, carbon monoxide and methane proportions, so that $PH_2 + PCO + PCH_4 = 100$ and $NH_2$, NCO and $NCH_4$ are the explosivity concentration limits, respectively of hydrogen, carbon monoxide and methane.

**Patentansprüche**

1. Verfahren zur Herstellung eines Synthesegases, das Wasserstoff und Kohlenstoffoxide enthält, ausgehend von einer Kohlenwasserstoffcharge, Wasser, freiem Sauerstoff und einem Transportgas, das zumindest 25 Vol.-% Wasserdampf und zumindest 2 Vol.-% zumindest eines Kohlenstoffoxides der Gruppe Kohlenmonoxid und Kohlendioxid enthält, dadurch gekennzeichnet, daß man gleichzeitig :

das Transportgas eine Aufeinanderfolge von zumindest 2 im wesentlichen adiabatischen Katalysatorbetten durchlaufen läßt, und

bei jedem Eingang der aufeinanderfolgenden Katalysatorbetten abwechselnd entweder eine Fraktion der Kohlenwasserstoffcharge oder eine Fraktion des Sauerstoffbedarfes zuführt, wobei darauf zu achten ist, daß das Transportgas, das den Sauerstoff aufnimmt, am Punkt der Einführung des Sauerstoffes nur höchstens 25 Vol.-% an Methan und 5 Vol.-% höhere Kohlenwasserstoffe enthält und daß die Menge des bei jeder betreffenden Eingangsstelle des Katalysatorbettes zugeführten Sauerstoffes unterhalb der Menge liegt, die dazu in der Lage ist, zu einem explosiven Gemisch nach Mischen mit dem Transportgas zu führen und daß das Transportgas, welches die Kohlenwasserstoffe aufnehmen soll, am Punkt der Einführung der Kohlenwasserstoffe nur höchstens 1 000 Vol. ppm (1 000 Volumteile pro Million) an freiem Sauerstoff enthält.

2. Verfahren nach Anspruch 1, dadurch gekennzeichnet, daß die Arbeitsgänge unter einem Druck von 1 bis 50 MPa und bei einer Temperatur zwischen 500 und 3 000 °C durchgeführt werden.

3. Verfahren nach Anspruch 1 oder 2, dadurch gekennzeichnet, daß man mit einer Kohlenwasserstoffcharge der mittleren molekularen Formel $C_aH_{4b}$ arbeitet und daß das Transportgas durch lebende Verbrennung einer Fraktion der Kohlenwasserstoffcharge in Gegenwart von Wasserdampf erhalten ist, wobei die Verbrennung mit Sauerstoff einer Reinheit von mehr als 90 Vol.-% und unter solchen Bedingungen durchgeführt wird, daß die molekulare Menge an Sauerstoff mindestens gleich dem 0,4-fachen der Summe (a + b) und das molare Verhältnis $H_2O$ zu den Kohlenstoffatomen größer als 1 sind.

4. Verfahren nach Anspruch 1 oder 2, dadurch gekennzeichnet, daß das Transportgas durch Reformieren einer Fraktion der Kohlenwasserstoffcharge mit Wasserdampf erhalten ist, wobei das Reformieren praktisch unter dem gleichen Druck durchgeführt wird wie dem bei der Herstellung von Synthesegas und bei einer Temperatur zwischen 500 und 1 000 °C.

5. Verfahren nach Anspruch 1 oder 2, dadurch gekennzeichnet, daß die Anzahl der katalytischen Betten zumindest 4 beträgt.

6. Verfahren nach einem der Ansprüche 1 bis 5, dadurch gekennzeichnet, daß der Sauerstoff beim Eingang der Betten mit ungerader Zahl und der Kohlenwasserstoff beim Eingang der Betten mit gerader Zahl eingeführt wird.

7. Verfahren nach einem der Ansprüche 1 bis 5, dadurch gekennzeichnet, daß der Kohlenwasserstoff am Eingang der Betten mit ungerader Zahl und der Sauerstoff am Eingang der Betten mit gerader Zahl zugeführt wird.

8. Verfahren nach einem der Ansprüche 1 bis 7, dadurch gekennzeichnet, daß der Betrieb unter einem Druck von 3 bis 30 MPa und bei einer Temperatur zwischen 700 und 2 000 °C durchgeführt wird.

9. Verfahren nach einem der Ansprüche 1 bis 8, dadurch gekennzeichnet, daß jede Sauerstoffraktion so ist, daß der Volumprozentsatz an Sauerstoff in der Mischung dieser Fraktion mit dem Transportgas unterhalb dem Wert L liegt, der durch folgende Gleichung definiert ist :

$$L = \frac{100}{\frac{PH_2}{NH_2} + \frac{PCO}{NCO} + \frac{PCH_4}{NCH_4}}$$

worin, $PH_2$, PCO und $PCH_4$ jeweils die Mengenanteile an Wasserstoff, Kohlenmonoxid und Methan sind, so daß $PH_2$ + PCO + $PCH_4$ = 100 sind und $NH_2$, NCO und $NCH_4$ die % der Grenzkonzentrationen der Explosivität von jeweils Wasserstoff, Kohlenmonoxid und Methan sind.

FIG.1

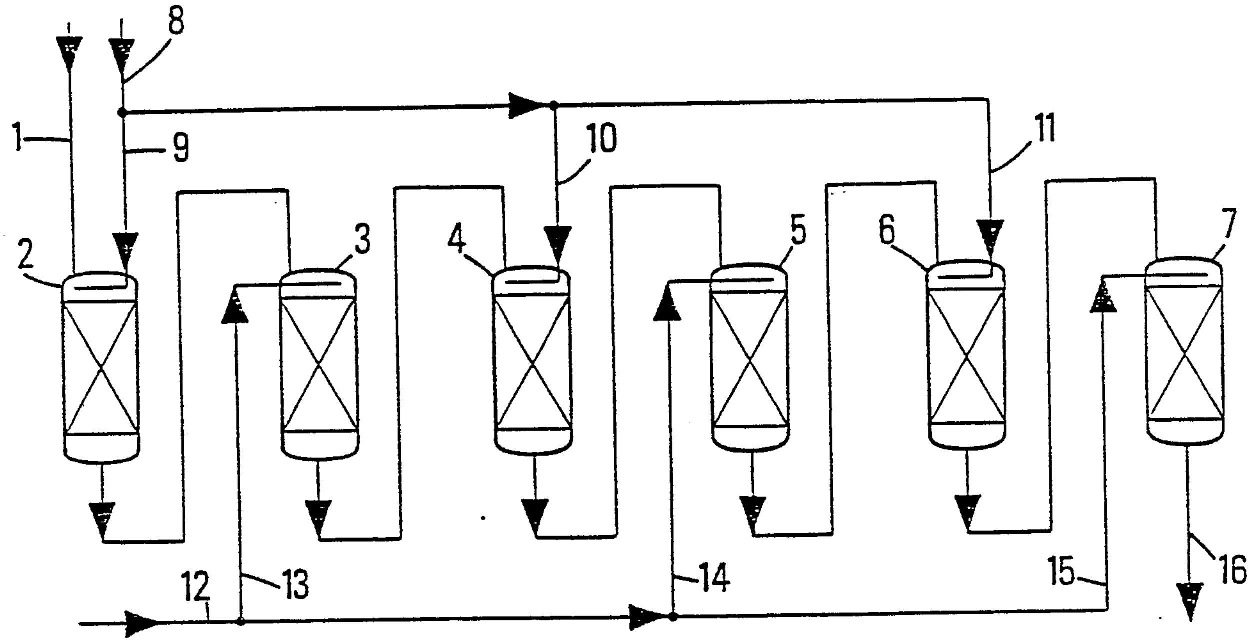


FIG.2

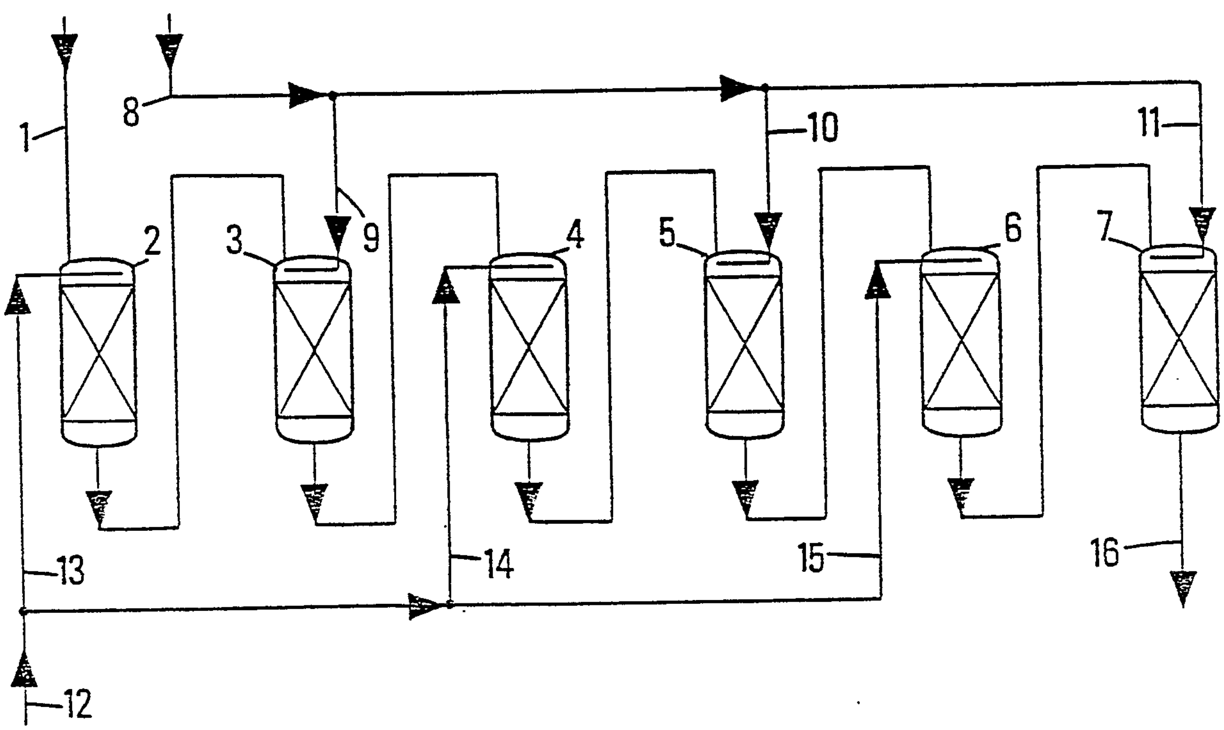

FIG.3

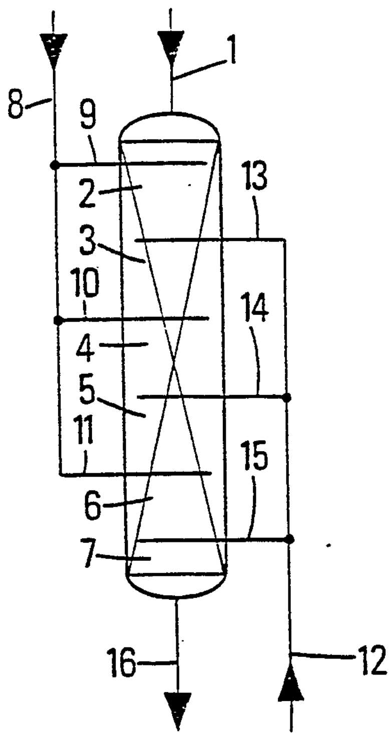


FIG.4

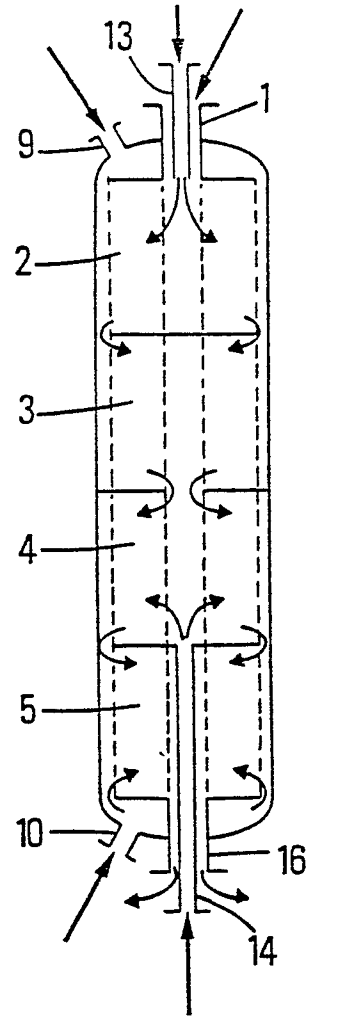


FIG.5A

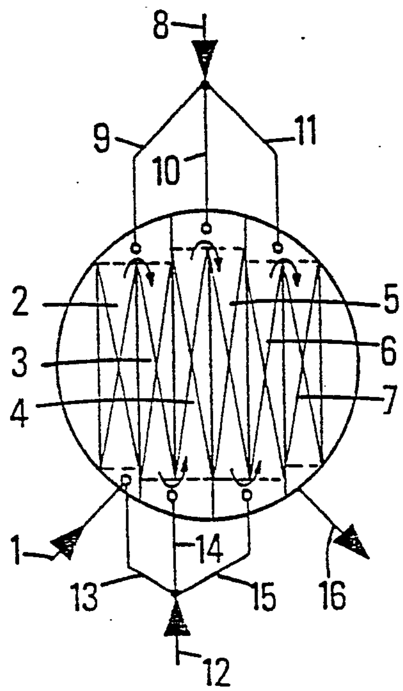


FIG 5B